# EUROPEAN PATENT SPECIFICATION

(11) **EP 4 464 389 B1**
(45) Date of publication and mention of the grant of the patent: **29.04.2026**
(21) Application number: 23739945.6
(22) Date of filing: 09.01.2023
(51) Int. Cl.: A63F 13/213, A63F 13/25, G06V 40/20, A63F 13/211, A63F 13/235, A63F 13/428, A63F 13/27, A63F 13/53, A63F 13/216, A63F 13/803

(54) **GAME CONTROL METHOD AND APPARATUS BASED ON HUMAN-VEHICLE INTERACTION, VEHICLE-MOUNTED END, AND VEHICLE**
SPIELSTEUERUNGSVERFAHREN UND -VORRICHTUNG AUF BASIS VON INTERAKTION ZWISCHEN MENSCH UND FAHRZEUG, FAHRZEUGMONTIERTES ENDE UND FAHRZEUG
PROCÉDÉ ET APPAREIL DE COMMANDE DE JEU BASÉS SUR UNE INTERACTION HOMME-VÉHICULE, EXTRÉMITÉ MONTÉE SUR VÉHICULE ET VÉHICULE

(30) Priority: 14.01.2022 CN 202210042402
(43) Date of publication of application: 20.11.2024
(73) Proprietor: Great Wall Motor Company Limited, Baoding, Hebei 071000 (CN)
(72) Inventor: LIU, Ziqiu, Baoding, Hebei 071000 (CN)
(74) Representative: Klunker IP Patentanwälte PartG mbB
(86) International application number: PCT/CN2023/071176
(87) International publication number: WO 2023/134603

(56) References cited:
- CN-A- 110 947 181
- CN-A- 111 045 587
- CN-A- 112 843 699
- CN-A- 112 891 937
- CN-A- 112 891 938
- CN-A- 112 891 938
- CN-A- 115 120 961
- US-A1- 2010 279 768
- US-A1- 2014 274 378
- US-A1- 2019 164 344

## Description

### TECHNICAL FIELD

The present invention relates to the field of intelligent automobile technology, and in particular to a game control method based on human-vehicle interaction, a device, a vehicle terminal and a vehicle.

### BACKGROUND

With the development of science and technology, automobiles are no longer just a means of transportation in the traditional sense, but also take into account functions such as gaming and entertainment. In existing technologies, users play games in automobiles mainly through game interaction between intelligent terminals and vehicle terminals, for example, play games with a smart phone as a game pad and a vehicle terminal as a game console, or control automobile lights to flash at a preset rhythm through an intelligent terminal.

Obviously, in the game interaction manner of the existing technologies, the human-vehicle interaction process needs to completely rely on intelligent terminals for game control, which cannot reflect the intelligent effect of the vehicle and cannot meet users' expectations for a higher interactive experience of intelligent automobiles.

CN 112 891 938 A discloses a vehicle end game method, device, system and equipment and a storage medium. The vehicle end game method comprises: projecting a game interface outside a vehicle; acquiring a game image of a player in the game interface; and identifying the game image to trigger the corresponding multimedia component to display the multimedia resource corresponding to the identification result.

CN 112 843 699 A discloses a vehicle end game method, device, system and equipment and a storage medium, and the vehicle end game method comprises the steps: projecting a game interface outside a vehicle; acquiring a game image of a player in the game interface; and identifying the game image to determine the game state of the player.

US 2019/164344 A1 discloses projecting an interactive scene onto a surface from a vehicle which is utilized by the vehicle to provide a scene or image that a user may interact with through various gestures detected by the system.

CN 112 891 937 A discloses a vehicle end game method, device, system and equipment and a storage medium, the vehicle end game method comprises: projecting a game interface outside a vehicle; when it is detected that at least one player enters the game interface, triggering a vehicle-mounted sensor to start detection; and determining the game state of the player based on the detection signal of the vehicle-mounted sensor.

### SUMMARY

It is an object of the present invention to provide a game control method based on human-vehicle interaction, a related device, a related vehicle terminal and a related vehicle, aiming to meet the users' expectations for a higher interactive experience of intelligent automobiles and enrich the game entertainment experience of intelligent automobiles.

The above object is achieved by the features of claim 1 regarding the method, by the features of claim 7 regarding the device, by the features of claim 8 regarding the vehicle terminal, and by the features of claim 9 regarding the vehicle. Further embodiments are defined in the dependent claims.

In the technical scheme provided by the present invention, a game application is run after receiving a game start instruction from a user to obtain a game screen of the game application, and an imaging signal containing the game screen is generated. The imaging signal is sent to a lamp module of a vehicle to enable the lamp module to project imaging content in a preset area according to the imaging signal. A game instruction for operating the game application is determined according to an obtained gesture action of the user. The game application is controlled to execute the game instruction to obtain a changed game screen corresponding to the game instruction, so as to enable the game screen in the imaging content to be changed to a changed game screen. Compared with the existing technologies in which users can only operate intelligent terminals to control game application, the above scheme shown in the present invention enables the users to achieve fun control of the game application running on the vehicle by performing any gesture action (such as hand movements and body movements), and the changed game screen corresponding to the game instruction can be projected through the lamp module, thereby the users' expectations for a higher interactive experience of intelligent automobiles can be satisfied and the game entertainment experience of intelligent automobiles can be enriched.

### DESCRIPTION OF THE DRAWINGS

In order to illustrate the technical solutions in the present invention more clearly, the drawings that need to be used in the description of the invention or exemplary technologies will be briefly introduced below.
FIG. 1a is a schematic diagram of an architecture of a game control system based on human-vehicle interaction;
FIG. 1b is a schematic diagram of an interaction process;
FIG. 1c is a schematic diagram of an interaction process;
FIG. 1d is a schematic diagram of an application scenario;
FIG. 2 is a flowchart of a game control method based on human-vehicle interaction;
FIG. 3 is a flowchart of another game control method based on human-vehicle interaction; and
FIG. 4 is a schematic diagram of an architecture of a game control device based on human-vehicle interaction.

### DETAILED DESCRIPTION OF THE EMBODIMENTS

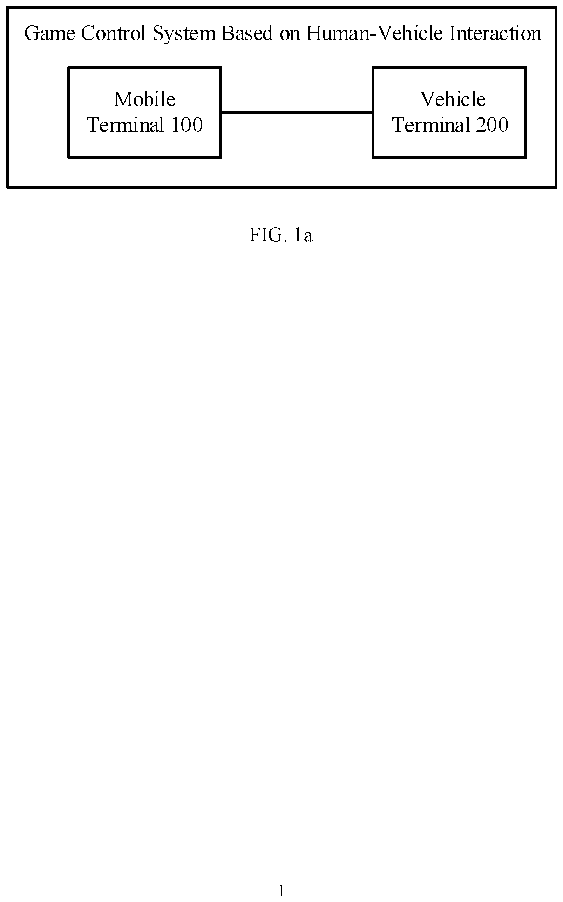

As shown in FIG. 1a which is a schematic diagram of an architecture of a game control system based on human-vehicle interaction, the game control system includes: a mobile terminal 100 and a vehicle terminal 200.

Herein, the mobile terminal 100 and a vehicle where the vehicle terminal 200 is located are both provided with an ultra-wide band (Ultra-Wide Band, UWB) module in advance, to ensure that UWB communication can be carried out between the mobile terminal 100 and the vehicle. The UWB module preset on the vehicle is considered to be a positioning anchor point. In addition, the mobile terminal 100 is held by a user by default.

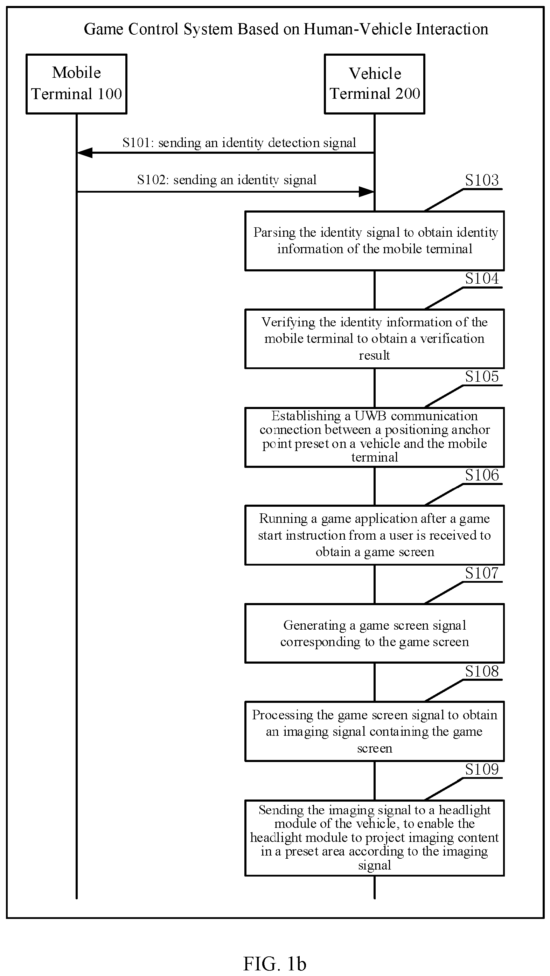

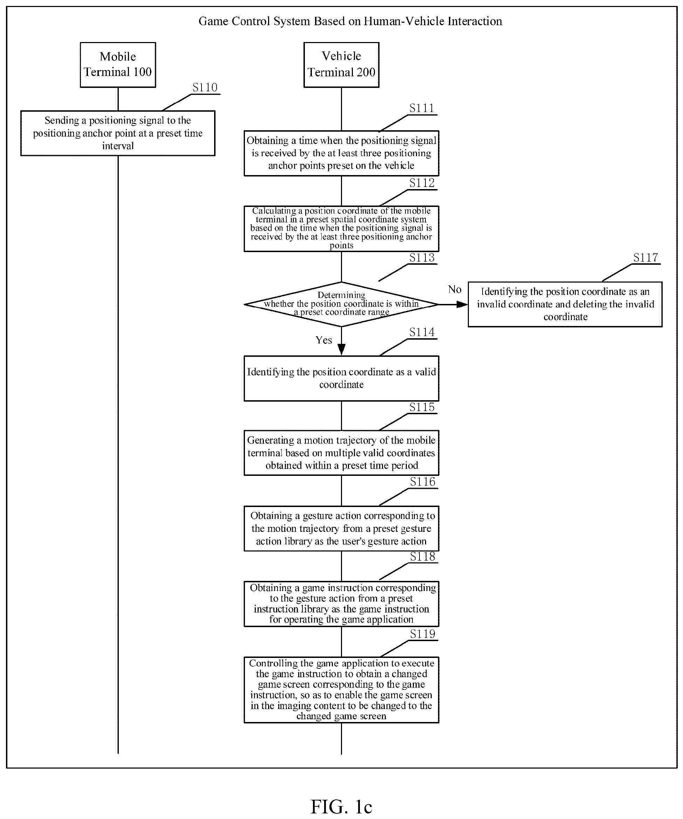

It should be noted that an information interaction process between the mobile terminal 100 and the vehicle terminal 200, as shown in FIGS. 1b and 1c, includes the following steps S101 to S118.

In step S101: an identity detection signal is sent by the vehicle terminal 200 to the mobile terminal 100.

Herein, a signal transmission mode of the vehicle terminal 200 sending the identity detection signal to the mobile terminal 100 includes but is not limited to: Bluetooth transmission, WIFI transmission, etc.

In step S102: an identity signal is sent by the mobile terminal 100 to the vehicle terminal 200 after the identity detection signal is received.

Herein, the mobile terminal 100, upon receiving the identity detection signal, will display a prompt to enter a password through a preset interface; and generate, after receiving the password entered by a holder of the mobile terminal 100, an identity signal containing the password and send the same to the vehicle.

In step S103: the identity signal is parsed by the vehicle terminal 200 to obtain identity information of the mobile terminal 100.

In step S104: the identity information of the mobile terminal 100 is verified by the vehicle terminal 200 to obtain a verification result.

In step S105: a UWB communication connection between the positioning anchor point preset on a vehicle and the mobile terminal 100 is established by the vehicle terminal 200 if the verification result indicates that the mobile terminal 100 has a communication authority.

Among them, the process shown in steps S101-S105 is essentially that: the vehicle terminal 200 performs an authentication on the mobile terminal 100, and establishes, if it is determined that the mobile terminal 100 has passed the authentication, a communication connection between the positioning anchor point and the mobile terminal 100.

It should be noted that the number of positioning anchor points preset on the vehicle is at least three, and the locations where each positioning anchor point is installed are different. The so-called UWB communication means that the positioning anchor point and the mobile terminal 100 can send and receive UWB signals sent by each other.

In step S106: a game application is run by the vehicle terminal 200 after a game start instruction from a user is received to obtain a game screen of the game application.

Herein, game applications are prestored in the vehicle terminal 200, and the user can select a game application to run by sending a game start instruction.

In step S107: a game screen signal corresponding to the game screen is generated by the vehicle terminal 200.

In step S108: the game screen signal is processed by the vehicle terminal 200 to obtain an imaging signal containing the game screen.

Herein, the imaging signal is transmitted through a bus, and a bus type includes but is not limited to a CAN bus or a LIN bus.

In step S109: the imaging signal is sent by the vehicle terminal 200 to a lamp module of the vehicle, to enable the lamp module to project imaging content in a preset area according to the imaging signal.

Herein, the lamp module includes a digital light processing device and a projection lens. Particularly, after the imaging signal is received by the lamp module, the imaging signal is processed by the digital light processing device to obtain a projection light containing imaging content, and then the projection light is reflected into the projection lens, and the projection light is projected onto the ground through the projection lens, so that the imaging content is presented in the preset area (including but not limited to an area illuminated by the light of the lamp module). The so-called lamp module may particularly be a pixel lamp including a digital light processing device and a projection lens.

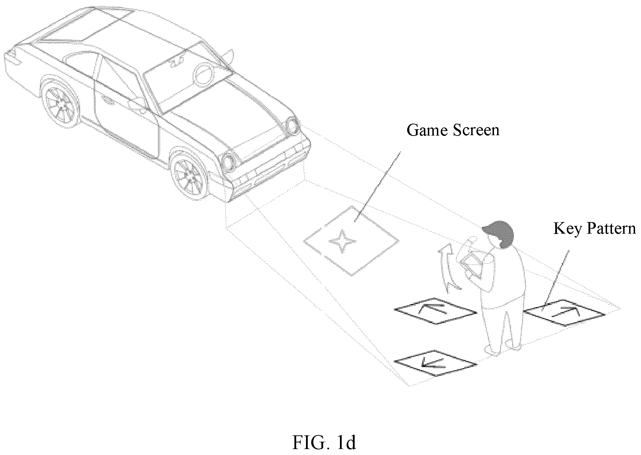

It should be noted that the so-called imaging content includes: a game screen and a plurality of preset key patterns. The number and area of the key pattern may be set by the technical personnel according to the actual situation. Particularly, the specific scene of the light module projecting the game screen and the key pattern on the ground in front of the vehicle (here the ground in front of the vehicle is regarded as the preset area) may be seen in FIG. 1d.

In step S110: a positioning signal is sent by the mobile terminal 100 to the positioning anchor point at a preset time interval.

Herein, the execution sequence of step S110 is not limited to the shown sequence. Particularly, the mobile terminal 100, after being initiated, may also maintain a state of sending the positioning signal to the positioning anchor point.

In step S111: a time when the positioning signal is received by the at least three positioning anchor points preset on the vehicle is obtained by the vehicle terminal 200.

Herein, if it is wanted to locate the three-dimensional spatial coordinates of the mobile terminal 100, a vertical distance between each positioning anchor point is required.

In step S112: a position coordinate of the mobile terminal 100 in a preset spatial coordinate system is calculated by the vehicle terminal 200 based on the time when the positioning signal is received by the at least three positioning anchor points.

Herein, an algorithm used in the calculation of the position coordinate of the mobile terminal 100 in the preset spatial coordinate system based on the time when the positioning signal is received by the at least three positioning anchor points includes, but not limited to, TOA algorithm, TDOA algorithm, AOA algorithm, TOA&AOA algorithm, TDOA&AOA algorithm and other wireless positioning algorithms. In general, the wireless positioning algorithms such as TOA algorithm, TDOA algorithm, AOA algorithm, TOA&AOA algorithm, TDOA&AOA algorithm, etc., are all common knowledge familiar to persons skilled in the art, and will not be repeated here.

It should be noted that the so-called preset spatial coordinate system includes but is not limited to: a spatial rectangular coordinate system established based on any positioning anchor point as the coordinate origin, an existing geodetic coordinate system, etc.

In step S113: it is determined, by the vehicle terminal, whether the position coordinate is within a preset coordinate range.

If the position coordinate is within the preset coordinate range, then step S114 is executed, if the position coordinate is not within the preset coordinate range, then step S117 is executed.

It should be noted that the preset coordinate range includes: position coordinates of the preset area in the preset spatial coordinate system. Particularly, if it is assumed that the preset area is a ground area illuminated by the lamp, then the preset coordinate range includes: position coordinates of the ground area illuminated by the lamps in the preset spatial coordinate system (taking the earth coordinate system as an example), and various position coordinates above the ground area illuminated by the lamps, all of which belong to the preset coordinate range.

In step S114: the position coordinate is identified by the vehicle terminal 200 as a valid coordinate.

The vehicle terminal 200, after executing step S114, continues to execute step S115.

In step S115: a motion trajectory of the mobile terminal 100 is generated by the vehicle terminal 200 based on multiple valid coordinates obtained within a preset time period.

Herein, the motion trajectory of the mobile terminal 100 includes but is not limited to: the user holding the mobile terminal 100 moves from one position to another (i.e., the trajectory of human-body movement), the user's hand holding the mobile terminal 100 moves from one position to another (i.e., the trajectory of hand movement), etc.

Particularly, the generating of the motion trajectory of the mobile terminal 100 based on the multiple valid coordinates obtained within the preset time period includes, but not limited to, a step of: linking the multiple valid coordinates generated within the preset time period in order from early to late, to obtain the motion trajectory of the mobile terminal 100 within the preset time period.

It should be noted that the multiple valid coordinates within the preset time period include, but not limited to, the position coordinates generated when the user holding the mobile terminal 100 moves a certain distance within the preset area within the preset time period, or the position coordinates generated when the user's hand holding the mobile terminal 100 moves a certain distance.

In step S116: a gesture action corresponding to the motion trajectory is obtained by the vehicle terminal 200 from a preset gesture action library as the user's gesture action.

The vehicle terminal, after executing step S116, continues to execute S118.

Herein, the preset gesture action library includes various motion trajectories and the gesture action corresponding to each of the motion trajectory. The so-called gesture action includes, but not limited to, a hand (i.e., the hand holding the mobile terminal 100) movement (e.g., left swipe, right swipe, up swipe, down swipe), a human-body (i.e., the human-body holding the mobile terminal 100) movement (e.g., left move, right move, forward move, backward move), etc.

Optionally, in addition to obtaining the gesture action corresponding to the motion trajectory from the gesture action library as the user's gesture action, the vehicle terminal 200 may also be configured to obtain a human-body image taken by a camera preset on the vehicle, and perform human-body gesture recognition on the human-body image to obtain the user's gesture action.

It should be noted that the specific implementation process of human-body gesture recognition is a technical means familiar to persons skilled in the art, and will not be repeated here.

In step S117, the position coordinate is identified by the vehicle terminal 200 as an invalid coordinate and deleted.

In step S118: a game instruction corresponding to the gesture action is obtained by the vehicle terminal 200 from a preset instruction library as the game instruction for operating the game application.

Herein, the preset instruction library includes various gesture actions and the game instruction corresponding to each gesture action.

It should be noted that the process shown in S112-S118 above is essentially that: the vehicle terminal 200 determines the game instruction for operating the game application based on the obtained gesture action of the user. In addition, in addition to using the user's gesture action to determine the game instruction for operating the game application, the vehicle terminal 200 may also use the user's position to determine the game instruction for operating the game application.

Particularly, the process of utilizing the user's position to determine the game instruction for operating the game application is as follows:
1. Obtaining the time when the positioning signal is received by the at least three positioning anchor points preset on the vehicle.
2. Obtaining the user's position based on the time when the positioning signal is received by the at least three positioning anchor points.

Generally speaking, the user's position is essentially the position of the mobile terminal 100, and the corresponding calculation process may refer to the above step S112 and the explanation of this step.

3. Obtaining, in case that the user's position is located in the area where any key pattern is located and maintained for a preset duration, the game instruction corresponding to the key pattern where the position is located from the preset instruction library as the game instruction for operating the game application.

It should be noted that since the key pattern is a plane image, the area where the key pattern is located shown in this embodiment particularly refers to a three-dimensional space area where the key pattern is on the ground, which may be simply understood as the space area located above the key pattern.

S119: the game application is controlled by the vehicle terminal 200 to execute the game instruction to obtain a changed game screen corresponding to the game instruction, so as to enable the game screen in the imaging content to be changed to the changed game screen.

In summary, compared with the existing technologies in which users can only operate intelligent terminals to control game applications, the scheme shown in this embodiment enables the users to achieve fun control of the game application running on the vehicle terminal 200 by performing any gesture action (such as hand movement and human-body movement), and the changed game screen corresponding to the game instruction can be projected through the lamp module, thereby the user's expectation for a higher interactive experience of intelligent automobiles is satisfied and the game entertainment experience of intelligent automobiles is enriched.

Based on the information interaction process shown above, a corresponding game control method based on human-vehicle interaction is also provided by the present invention.

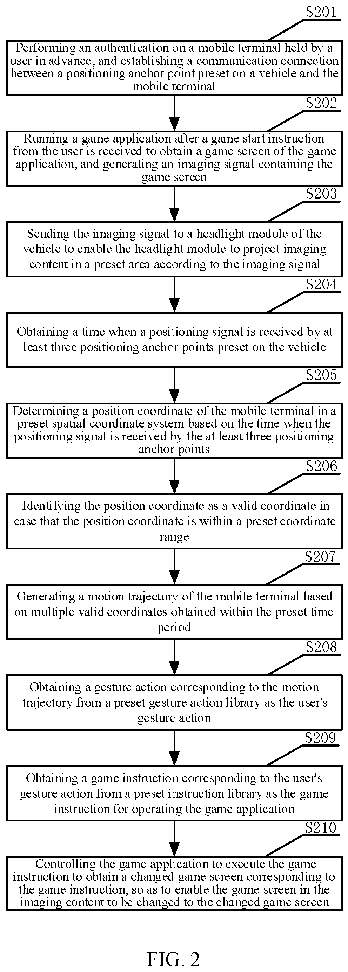

As shown in FIG. 2 which is a flowchart of a game control method based on human-vehicle interaction provided in the embodiment of the present invention, the game control system is applied to the vehicle terminal 200 and includes the following steps S201 to S210.

In step S201: a mobile terminal 100 held by a user is authenticated in advance, and a communication connection is established between a positioning anchor point preset on a vehicle and the mobile terminal 100.

Herein, at least three positioning anchor points is provided.

In step S202: a game application is run after a game start instruction from the user is received to obtain a game screen of the game application, and an imaging signal containing the game screen is generated.

In step S203: the imaging signal is sent to a lamp module of the vehicle to enable the lamp module to project imaging content in a preset area according to the imaging signal.

The imaging content includes the game screen and a plurality of preset key patterns.

In step S204: a time when a positioning signal is received by at least three positioning anchor points preset on the vehicle is obtained.

The positioning signal is sent by the mobile terminal 100 held by the user.

In step S205: a position coordinate of the mobile terminal 100 in a preset spatial coordinate system is determined based on the time when the positioning signal is received by the at least three positioning anchor points.

In step S206: the position coordinate is identified as a valid coordinate in case that the position coordinate is within a preset coordinate range.

The preset coordinate range includes position coordinates of the preset area in the preset spatial coordinate system.

In step S207: a motion trajectory of the mobile terminal 100 is generated based on multiple valid coordinates obtained within the preset time period.

In step S208: a gesture action corresponding to the motion trajectory is obtained from a preset gesture action library as the user's gesture action.

In step S209: a game instruction corresponding to the user's gesture action is obtained from a preset instruction library as the game instruction for operating the game application.

In step S210: the game application is controlled to execute the game instruction to obtain a changed game screen corresponding to the game instruction, so as to enable the game screen in the imaging content to be changed to the changed game screen.

In summary, compared with the existing technologies in which users can only operate intelligent terminals to control game applications, the scheme shown in this embodiment enables the users to achieve fun control of the game application running on the vehicle terminal 200 by performing any gesture action (such as hand movement and human-body movement), and the changed game screen corresponding to the game instruction can be projected through the lamp module, thereby the user's expectation for a higher interactive experience of intelligent automobiles is satisfied and the game entertainment experience of intelligent automobiles is enriched.

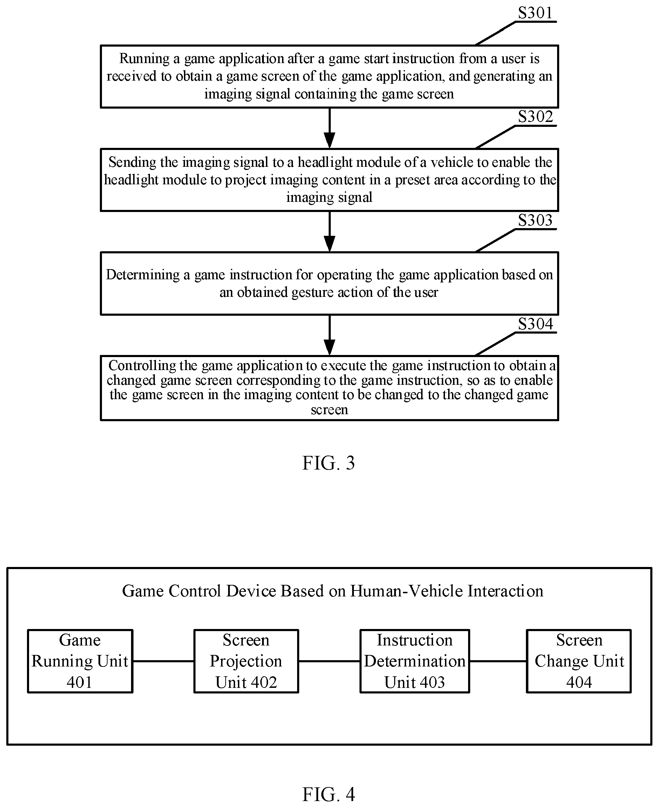

It should be noted that step S201 mentioned in the above is an optional implementation manner of the game control method based on human-vehicle interaction described herein. In addition, step S208 mentioned in the above embodiment is also an optional implementation manner of the game control method based on human-vehicle interaction described herein. For this reason, the process described in the above embodiment may be summarized as a method shown in FIG. 3.

As shown in FIG. 3 which is another flowchart of a game control method based on human-vehicle interaction, the game control method includes the following steps S301 to S304.

In step S301: a game application is run after a game start instruction from a user is received to obtain a game screen of the game application, and an imaging signal containing the game screen is generated.

Herein, the game application is pre-saved.

In step S302, the imaging signal is sent to a lamp module of a vehicle to enable the lamp module to project imaging content in a preset area according to the imaging signal.

Herein, the imaging content includes a game screen.

In step S303: a game instruction for operating the game application is determined based on an obtained gesture action of the user.

In step S304: the game application is controlled to execute the game instruction to obtain a changed game screen corresponding to the game instruction, so as to enable the game screen in the imaging content to be changed to the changed game screen.

In summary, compared with the existing technologies in which users can only operate intelligent terminals to control game applications, the scheme shown in this embodiment enables the users to achieve fun control of the game application running on the vehicle terminal by performing any gesture action (such as hand movement and human-body movement), and the changed game screen corresponding to the game instruction can be projected through the lamp module, thereby the user's expectation for a higher interactive experience of intelligent automobiles is satisfied and the game entertainment experience of intelligent automobiles is enriched.

Corresponding to the game control method based on human-vehicle interaction provided above, a game control device based on human-vehicle interaction is also provided by the present invention, and the game control device may be implemented by one or more processors.

As shown in FIG. 4 which is a schematic diagram of an architecture of a game control device based on human-vehicle interaction provided in the embodiment of the present invention, the game control device includes: a game running unit 401, a screen projection unit 402, an instruction determination unit 403 and a screen change unit 404.

The game running unit 401 is configured to run a game application after receiving a game start instruction from a user to obtain a game screen of the game application, and generate an imaging signal containing the game screen. The game application is pre-saved.

The screen projection unit 402 is configured to send the imaging signal to a lamp module of a vehicle, to enable the lamp module to project imaging content in a preset area according to the imaging signal. The imaging content includes a game screen.

The instruction determination unit 403 is configured to determine a game instruction for operating the game application according to an obtained gesture action of the user.

Herein, the instruction determination unit 403 is particularly configured to: obtain a time when a positioning signal is received by at least three positioning anchor points preset on the vehicle, where the positioning signal is sent by a mobile terminal held by the user; determine a position coordinate of the mobile terminal in a preset spatial coordinate system based on the time when the positioning signal is received by the at least three positioning anchor points; determine the gesture action of the user based on the position coordinate; and obtain a game instruction corresponding to the gesture action from a preset instruction library as the game instruction for operating the game application.

The instruction determination unit 403 is also configured to: perform an authentication on the mobile terminal in advance and establish a communication connection between the positioning anchor points and the mobile terminal.

The instruction determination unit 403 is particularly configured to: identify the position coordinate as a valid coordinate in case that the position coordinate is within a preset coordinate range, where the preset coordinate range includes position coordinates of the preset area in the preset spatial coordinate system; and generate a motion trajectory of the mobile terminal based on multiple valid coordinates obtained within a preset time period; obtain a gesture action corresponding to the motion trajectory from a preset gesture action library as the gesture action of the user.

The instruction determination unit 403 is particularly configured to: obtain a human-body image taken by a camera preset on the vehicle; perform human-body posture recognition on the human-body image to obtain the posture action of the user; obtain a game instruction corresponding to the posture action from a preset instruction library as the game instruction for operating the game application.

The instruction determination unit 403 is also configured to determine the game instruction for operating the game application according to an obtained position of the user.

The instruction determination unit 403 is particularly configured to: obtain the time when the positioning signal is received by the at least three positioning anchor points preset on the vehicle, where the positioning signal is sent by the mobile terminal held by the user; obtain a position of the user based on the time when the positioning signal is received by the at least three positioning anchor points; obtain a game instruction corresponding to the key pattern where the position is located from the preset instruction library in case that the position is located in the area where any key pattern is located and maintained for a preset duration, as the game instruction for operating the game application.

The screen change unit 404 is configured to control the game application to execute the game instruction, to obtain a changed game screen corresponding to the game instruction, so as to enable the game screen in the imaging content to be changed to the changed game screen.

Each of the above units may be implemented by one or more processors.

It can be understood that the processor in the embodiment(s) of the present application may be a central processing unit (Central Processing Unit, CPU), or other general-purpose processors, a digital signal processor (Digital Signal Processor, DSP), an application-specific integrated circuit (Application Specific Integrated Circuit, ASIC), a field programmable gate array (Field Programmable Gate Array, FPGA) or other programmable logic devices, transistor logic devices, hardware components or any combination thereof. The general-purpose processor may be a microprocessor or any conventional processor.

In summary, compared with the existing technologies in which users can only operate intelligent terminals to control game applications, the scheme shown in this embodiment enables the users to achieve fun control of the game application running on the vehicle terminal by performing any gesture action (such as hand movement and human-body movement), and the changed game screen corresponding to the game instruction can be projected through the lamp module, thereby the user's expectation for a higher interactive experience of intelligent automobiles is satisfied and the game entertainment experience of intelligent automobiles is enriched.

The present invention also provides a vehicle terminal, which includes a computer program stored therein, where the computer program is configured to execute the game control method based on human-vehicle interaction provided by the present invention.

The present invention also provides a vehicle, which includes a computer program stored therein, where the computer program, when running on the vehicle, causes the game control method based on human-vehicle interaction provided by the present invention to be performed.

The functions described in the method embodiment(s) of the present invention, if implemented in the form of a software functional unit and sold or used as an independent product, may be stored in a storage medium readable by a computing device. Based on this understanding, the part of the embodiment of the present invention or the part of the technical solution that contributes to the prior art may be presented in the form of a software product. The software product is stored in a storage medium and includes several instructions that are configured to cause a computing device (which may be a personal computer, a server, a mobile computing device or a network device, etc.) to perform all or part of the steps of the method described in each embodiment of the present invention. The aforementioned storage medium includes various media that can store program codes, such as U disk, a mobile hard disk, a read-only memory, a random-access memory, a disk or an optical disk, etc.

In this disclosure, each embodiment is described in a progressive manner, and each embodiment focuses on the differences from other embodiments. The same or similar parts between the embodiments can be referred to each other.

The scope of the invention is defined by the appended claims.

## Claims

1. A game control method based on human-vehicle interaction, carried out by a vehicle terminal (200) and comprising:
(S301; S202) running, upon receiving a game start instruction from a user, a game application to obtain a game screen of the game application, and generating an imaging signal containing the game screen, wherein the game application is pre-saved;
(S302; S203) sending the imaging signal to a lamp module of a vehicle, to enable the lamp module to project imaging content in a preset area according to the imaging signal, wherein the imaging content comprises the game screen;
(S303) determining a game instruction for operating the game application according to an obtained gesture action of the user; and
(S304) controlling the game application to execute the game instruction to obtain a changed game screen corresponding to the game instruction, so as to enable the game screen in the imaging content to be changed to the changed game screen;
**characterized in that** the step of determining the game instruction for operating the game application according to the obtained gesture actions of the user comprises:
(S204) obtaining a time when a positioning signal is received by at least three positioning anchor points preset on the vehicle, wherein the positioning signal is sent by a mobile terminal (100) held by the user;
(S205) determining a position coordinate of the mobile terminal (100) in a preset spatial coordinate system based on the time when the positioning signal is received by the at least three positioning anchor points;
(S208) determining a gesture action of the user based on the position coordinate; and
(S209) obtaining a game instruction corresponding to the gesture action from a preset instruction library as the game instruction for operating the game application.

2. The method according to claim 1, wherein, before the step of (S204) obtaining the time when the positioning signal is received by the at least three positioning anchor points preset on the vehicle, the game control method further comprises:
(S201) performing an authentication on the mobile terminal in advance and establishing a communication connection between the positioning anchor points and the mobile terminal (100).

3. The method according to claim 1, wherein, the step of determining the gesture action of the user based on the position coordinate comprises:
(S206) identifying the position coordinate as a valid coordinate in case that the position coordinate is within a preset coordinate range, and the preset coordinate range comprises position coordinates of the preset area in the preset spatial coordinate system;
(S207) generating a motion trajectory of the mobile terminal (100) based on multiple valid coordinates obtained within a preset time period; and
(S208) obtaining a gesture action corresponding to the motion trajectory from a preset gesture action library as the gesture action of the user.

4. The method according to claim 1, wherein, the step of determining the game instruction for operating the game application according to the obtained gesture action of the user comprises:
obtaining a human-body image taken by a camera preset on the vehicle;
performing human-body gesture recognition on the human-body image to obtain a gesture action of the user; and
obtaining a game instruction corresponding to the gesture action from a preset instruction library as the game instruction for operating the game application.

5. The method according to claim 1, wherein, after the step of (S302; S203) sending the imaging signal to the lamp module of the vehicle, to enable the lamp module to project and imaging content in the preset area according to the imaging signal, the game control method further comprises:
determining the game instruction for operating the game application according to an obtained position of the user.

6. The method according to claim 5, wherein,
the imaging content further comprises a plurality of preset key patterns; and
the step of determining the game instruction for operating the game application according to the obtained position of the user comprises:
obtaining the time when the positioning signal is received by the at least three positioning anchor points preset on the vehicle, the positioning signal sent by the mobile terminal (100) held by the user;
obtaining a position of the user according to the time when the positioning signal is received by the at least three positioning anchor points; and
obtaining a game instruction corresponding to a key pattern where the position is located from the preset instruction library in case that the position is located in an area where any of the key patterns is located and maintained for a preset duration, as the game instruction for operating the game application.

7. A game control device based on human-vehicle interaction, comprising:
a game running unit (401), configured to run a game application after receiving a game start instruction from a user to obtain a game screen of the game application, and generate an imaging signal containing the game screen, wherein the game application is pre-saved;
a screen projection unit (S402), configured to send the imaging signal to a lamp module of a vehicle, to enable the lamp module to project imaging content in a preset area according to the imaging signal, and the imaging content comprises the game screen;
an instruction determination unit (403), configured to determine a game instruction for operating the game application according to an obtained gesture action of the user; and
a screen change unit (404), configured to control the game application to execute the game instruction, obtain a changed game screen corresponding to the game instruction, so as to enable the game screen in the imaging content to be changed to the changed game screen;
**characterized in that** the instruction determination unit (403) is configured to:
obtain a time when a positioning signal is received by at least three positioning anchor points preset on the vehicle, where the positioning signal is sent by a mobile terminal (100) held by the user;
determine a position coordinate of the mobile terminal (100) in a preset spatial coordinate system based on the time when the positioning signal is received by the at least three positioning anchor points;
determine the gesture action of the user based on the position coordinate; and
obtain a game instruction corresponding to the gesture action from a preset instruction library as the game instruction for operating the game application.

8. A vehicle terminal (200), comprising a computer program stored in the vehicle terminal (200), wherein the computer program comprises instructions which, when executed by the vehicle terminal, cause the vehicle terminal to execute the game control method based on human-vehicle interaction according to any one of claims 1-6.

## Patentansprüche

1. Spielsteuerungsverfahren basierend auf Mensch-Fahrzeug-Interaktion, das durch ein Fahrzeugterminal (200) durchgeführt wird und aufweist:
(S301; S202) Ausführen, nach Empfang einer Spielstartanweisung von einem Benutzer, einer Spielanwendung, um einen Spielbildschirm der Spielanwendung zu erhalten, und Erzeugen eines Bildsignals, das den Spielbildschirm enthält, wobei die Spielanwendung vorab gespeichert ist;
(S302; S203) Senden des Bildsignals an ein Lampenmodul eines Fahrzeugs, um das Lampenmodul zu veranlassen, entsprechend dem Bildsignal Bildinhalte in einem voreingestellten Bereich zu projizieren, wobei die Bildinhalte den Spielbildschirm aufweisen;
(S303) Bestimmen einer Spielanweisung zum Betreiben der Spielanwendung entsprechend einer erfassten Gestenaktion des Benutzers; und
(S304) Steuern der Spielanwendung, um die Spielanweisung auszuführen, um einen geänderten Spielbildschirm entsprechend der Spielanweisung zu erhalten, sodass der Spielbildschirm in den Bildinhalten in den geänderten Spielbildschirm geändert wird;
**dadurch gekennzeichnet, dass** der Schritt des Bestimmens der Spielanweisung zum Betreiben der Spielanwendung entsprechend den erfassten Gestenaktionen des Benutzers aufweist:
(S204) Erfassen einer Zeit, zu der ein Positionssignal von mindestens drei am Fahrzeug voreingestellten Positionsankerpunkten empfangen wird, wobei das Positionssignal von einem vom Benutzer gehaltenen Mobilterminal (100) gesendet wird;
(S205) Bestimmen einer Positionskoordinate des Mobilterminals (100) in einem voreingestellten räumlichen Koordinatensystem basierend auf der Zeit, zu der das Positionssignal von den mindestens drei Positionsankerpunkten empfangen wird;
(S208) Bestimmen einer Gestenaktion des Benutzers basierend auf der Positionskoordinate; und
(S209) Erhalten einer der Gestenaktion entsprechenden Spielanweisung aus einer voreingestellten Anweisungsbibliothek als Spielanweisung zum Betreiben der Spielanwendung.

2. Verfahren nach Anspruch 1, wobei das Spielsteuerungsverfahren vor dem Schritt (S204) des Erfassens der Zeit, zu der das Positionssignal von den mindestens drei am Fahrzeug voreingestellten Positionsankerpunkten empfangen wird, ferner aufweist:
(S201) Vorab-Durchführen einer Authentifizierung des Mobilterminals und Herstellen einer Kommunikationsverbindung zwischen den Positionsankerpunkten und dem Mobilterminal (100).

3. Verfahren nach Anspruch 1, wobei der Schritt des Bestimmens der Gestenaktion des Benutzers basierend auf der Positionskoordinate aufweist:
(S206) Identifizieren der Positionskoordinate als gültige Koordinate, falls die Positionskoordinate innerhalb eines voreingestellten Koordinatenbereichs liegt, wobei der voreingestellte Koordinatenbereich Positionskoordinaten des voreingestellten Bereichs in dem voreingestellten räumlichen Koordinatensystem aufweist;
(S207) Erzeugen einer Bewegungsbahn des Mobilterminals (100) basierend auf mehreren gültigen Koordinaten, die innerhalb eines voreingestellten Zeitraums erhalten werden; und
(S208) Erhalten einer der Bewegungsbahn entsprechenden Gestenaktion aus einer voreingestellten Gestenaktionsbibliothek als Gestenaktion des Benutzers.

4. Verfahren nach Anspruch 1, wobei der Schritt des Bestimmens der Spielanweisung zum Betreiben der Spielanwendung entsprechend der erfassten Gestenaktion des Benutzers aufweist:
Erhalten eines von einer am Fahrzeug voreingestellten Kamera aufgenommenen Menschkörperbildes;
Durchführen einer Menschkörper-Gestenerkennung an dem Menschkörperbild, um eine Gestenaktion des Benutzers zu erhalten; und
Erhalten einer der Gestenaktion entsprechenden Spielanweisung aus einer voreingestellten Anweisungsbibliothek als Spielanweisung zum Betreiben der Spielanwendung.

5. Verfahren nach Anspruch 1, wobei das Spielsteuerungsverfahren nach dem Schritt (S302; S203) des Sendens des Bildsignals an das Lampenmodul des Fahrzeugs, um das Lampenmodul zu veranlassen, entsprechend dem Bildsignal Bildinhalte in dem voreingestellten Bereich zu projizieren, ferner aufweist:
Bestimmen der Spielanweisung zum Betreiben der Spielanwendung entsprechend einer erfassten Position des Benutzers.

6. Verfahren nach Anspruch 5, wobei
die Bildinhalte ferner eine Mehrzahl von voreingestellten Tastenmustern aufweisen; und
der Schritt des Bestimmens der Spielanweisung zum Betreiben der Spielanwendung entsprechend der erfassten Position des Benutzers aufweist:
Erfassen der Zeit, zu der das Positionssignal von den mindestens drei am Fahrzeug voreingestellten Positionsankerpunkten empfangen wird, wobei das Positionssignal von dem vom Benutzer gehaltenen Mobilterminal (100) gesendet wird;
Erhalten einer Position des Benutzers entsprechend der Zeit, zu der das Positionssignal von den mindestens drei Positionsankerpunkten empfangen wird; und
Erhalten einer einer Tastenmuster entsprechenden Spielanweisung aus der voreingestellten Anweisungsbibliothek, falls die Position in einem Bereich liegt, in dem sich eines der Tastenmuster befindet, und für eine voreingestellte Dauer beibehalten wird, als Spielanweisung zum Betreiben der Spielanwendung.

7. Spielsteuerungsvorrichtung basierend auf Mensch-Fahrzeug-Interaktion, mit:
einer Spielausführungseinheit (401), die eingerichtet ist zum Ausführen einer Spielanwendung nach Empfang einer Spielstartanweisung von einem Benutzer, um einen Spielbildschirm der Spielanwendung zu erhalten, und zum Erzeugen eines Bildsignals, das den Spielbildschirm enthält, wobei die Spielanwendung vorab gespeichert ist;
einer Bildschirmprojektionseinheit (402), die eingerichtet ist zum Senden des Bildsignals an ein Lampenmodul eines Fahrzeugs, um das Lampenmodul zu veranlassen, entsprechend dem Bildsignal Bildinhalte in einem voreingestellten Bereich zu projizieren, wobei die Bildinhalte den Spielbildschirm aufweisen;
einer Anweisungsbestimmungseinheit (403), die eingerichtet ist zum Bestimmen einer Spielanweisung zum Betreiben der Spielanwendung entsprechend einer erfassten Gestenaktion des Benutzers; und
einer Bildschirmänderungseinheit (404), die eingerichtet ist zum Steuern der Spielanwendung zur Ausführung der Spielanweisung, um einen der Spielanweisung entsprechenden geänderten Spielbildschirm zu erhalten, sodass der Spielbildschirm in den Bildinhalten in den geänderten Spielbildschirm geändert wird;
**dadurch gekennzeichnet, dass** die Anweisungsbestimmungseinheit (403) eingerichtet ist zum:
Erfassen einer Zeit, zu der ein Positionssignal von mindestens drei am Fahrzeug voreingestellten Positionsankerpunkten empfangen wird, wobei das Positionssignal von einem vom Benutzer gehaltenen Mobilterminal (100) gesendet wird;
Bestimmen einer Positionskoordinate des Mobilterminals (100) in einem voreingestellten räumlichen Koordinatensystem basierend auf der Zeit, zu der das Positionssignal von den mindestens drei Positionsankerpunkten empfangen wird;
Bestimmen der Gestenaktion des Benutzers basierend auf der Positionskoordinate; und
Erhalten einer der Gestenaktion entsprechenden Spielanweisung aus einer voreingestellten Anweisungsbibliothek als Spielanweisung zum Betreiben der Spielanwendung.

8. Fahrzeugterminal (200), mit einem in dem Fahrzeugterminal (200) gespeicherten Computerprogramm, wobei das Computerprogramm Anweisungen aufweist, die, wenn sie durch das Fahrzeugterminal ausgeführt werden, das Fahrzeugterminal veranlassen, das Spielsteuerungsverfahren basierend auf Mensch-Fahrzeug-Interaktion nach einem der Ansprüche 1-6 auszuführen.

## Revendications

1. Procédé de commande de jeu basé sur une interaction homme-véhicule, mis en œuvre au moyen d'un terminal (200) embarqué sur un véhicule et comprenant :
(S301 ; S202) le lancement, suite à la réception d'une instruction de début de jeu en provenance d'un utilisateur, d'une application de jeu afin d'obtenir un écran de jeu de l'application de jeu, et la génération d'un signal de formation d'image qui contient l'écran de jeu, dans lequel l'application de jeu est pré-sauvegardée ;
(S302 ; S203) l'envoi du signal de formation d'image sur un module de lampe d'un véhicule, afin de permettre que le module de lampe projette un contenu de formation d'image dans une zone prédéfinie conformément au signal de formation d'image, dans lequel le contenu de formation d'image comprend l'écran de jeu ;
(S303) la détermination d'une instruction de jeu pour faire fonctionner l'application de jeu conformément à une action en termes de gestuelle obtenue de l'utilisateur ; et
(S304) la commande de l'application de jeu afin d'exécuter l'instruction de jeu pour obtenir un écran de jeu modifié qui corresponde à l'instruction de jeu, de manière à permettre que l'écran de jeu selon le contenu de formation d'image soit modifié selon l'écran de jeu modifié ;
**caractérisé en ce que** l'étape de détermination de l'instruction de jeu pour faire fonctionner l'application de jeu conformément aux actions en termes de gestuelle obtenues de l'utilisateur comprend :
(S204) l'obtention d'un temps auquel un signal de positionnement est reçu par au moins trois points d'ancrage de positionnement qui sont prédéfinis sur le véhicule, dans lequel le signal de positionnement est envoyé par un terminal mobile (100) qui est détenu par l'utilisateur ;
(S205) la détermination d'une coordonnée de position du terminal mobile (100) dans un système de coordonnées spatiales prédéfini sur la base du temps auquel le signal de positionnement est reçu par les au moins trois points d'ancrage de positionnement ;
(S208) la détermination d'une action en termes de gestuelle de l'utilisateur sur la base de la coordonnée de position ; et
(S209) l'obtention d'une instruction de jeu qui corresponde à l'action en termes de gestuelle à partir d'une bibliothèque d'instructions prédéfinie en tant qu'instruction de jeu pour faire fonctionner l'application de jeu.

2. Procédé selon la revendication 1, dans lequel, avant l'étape (S204) d'obtention du temps auquel le signal de positionnement est reçu par les au moins trois points d'ancrage de positionnement qui sont prédéfinis sur le véhicule, le procédé de commande de jeu comprend en outre :
(S201) la réalisation d'une authentification sur le terminal mobile à l'avance et l'établissement d'une connexion de communication entre les points d'ancrage de positionnement et le terminal mobile (100).

3. Procédé selon la revendication 1, dans lequel l'étape de détermination de l'action en termes de gestuelle de l'utilisateur sur la base de la coordonnée de position comprend :
(S206) l'identification de la coordonnée de position en tant que coordonnée valide dans le cas où la coordonnée de position est à l'intérieur d'une plage de coordonnées prédéfinie, et la plage de coordonnées prédéfinie comprend des coordonnées de position de la zone prédéfinie dans le système de coordonnées spatiales prédéfini ;
(S207) la génération d'une trajectoire de mouvement du terminal mobile (100) sur la base de multiples coordonnées valides qui sont obtenues à l'intérieur d'une période de temps prédéfinie ; et
(S208) l'obtention d'une action en termes de gestuelle qui corresponde à la trajectoire de mouvement à partir d'une bibliothèque d'actions en termes de gestuelle en tant qu'action en termes de gestuelle de l'utilisateur.

4. Procédé selon la revendication 1, dans lequel l'étape de détermination de l'instruction de jeu pour faire fonctionner l'application de jeu conformément à l'action en termes de gestuelle obtenue de l'utilisateur comprend :
l'obtention d'une image de corps humain qui est prise par une caméra qui est prédéfinie sur le véhicule ;
la réalisation d'une reconnaissance de gestuelle de corps humain sur l'image de corps humain afin d'obtenir une action en termes de gestuelle de l'utilisateur ; et
l'obtention d'une instruction de jeu qui corresponde à l'action en termes de gestuelle à partir d'une bibliothèque d'instructions prédéfinie en tant qu'instruction de jeu pour faire fonctionner l'application de jeu.

5. Procédé selon la revendication 1, dans lequel, après l'étape (S302 ; S203) d'envoi du signal de formation d'image sur le module de lampe du véhicule afin de permettre que le module de lampe projette un contenu de formation d'image dans la zone prédéfinie conformément au signal de formation d'image, le procédé de commande de jeu comprend en outre :
la détermination de l'instruction de jeu pour faire fonctionner l'application de jeu conformément à une position obtenue de l'utilisateur.

6. Procédé selon la revendication 5, dans lequel :
le contenu de formation d'image comprend en outre une pluralité de motifs clés prédéfinis ; et
l'étape de détermination de l'instruction de jeu pour faire fonctionner l'application de jeu conformément à la position obtenue de l'utilisateur comprend :
l'obtention du temps auquel le signal de positionnement est reçu par les au moins trois points d'ancrage de positionnement qui sont prédéfinis sur le véhicule, le signal de positionnement étant envoyé par le terminal mobile (100) qui est détenu par l'utilisateur ;
l'obtention d'une position de l'utilisateur conformément au temps auquel le signal de positionnement est reçu par les au moins trois points d'ancrage de positionnement ; et
l'obtention d'une instruction de jeu qui corresponde à un motif clé au niveau duquel la position est localisée à partir de la bibliothèque d'instructions prédéfinie dans le cas où la position est localisée dans une zone au niveau de laquelle l'un quelconque des motifs clés est localisé et est maintenu pendant une durée prédéfinie, en tant qu'instruction de jeu pour faire fonctionner l'application de jeu.

7. Dispositif de commande de jeu sur la base d'une interaction homme-véhicule, comprenant :
une unité de lancement de jeu (401), configurée pour lancer une application de jeu après la réception d'une instruction de début de jeu en provenance d'un utilisateur afin d'obtenir un écran de jeu de l'application de jeu, et pour générer un signal de formation d'image qui contient l'écran de jeu, dans lequel l'application de jeu est pré-sauvegardée ;
une unité de projection sur écran (402), configurée pour envoyer le signal de formation d'image sur un module de lampe d'un véhicule, afin de permettre que le module de lampe projette un contenu de formation d'image dans une zone prédéfinie conformément au signal de formation d'image, dans lequel le contenu de formation d'image comprend l'écran de jeu ;
une unité de détermination d'instruction (403), configurée pour déterminer une instruction de jeu afin de faire fonctionner l'application de jeu conformément à une action en termes de gestuelle obtenue de l'utilisateur ; et
une unité de modification d'écran (404), configurée pour commander l'application de jeu afin d'exécuter l'instruction de jeu, pour obtenir un écran de jeu modifié qui corresponde à l'instruction de jeu, de manière à permettre que l'écran de jeu selon le contenu de formation d'image soit modifié selon l'écran de jeu modifié ;
**caractérisé en ce que** l'unité de détermination d'instruction (403) est configurée pour :
obtenir un temps auquel un signal de positionnement est reçu par au moins trois points d'ancrage de positionnement qui sont prédéfinis sur le véhicule, dans lequel le signal de positionnement est envoyé par un terminal mobile (100) qui est détenu par l'utilisateur ;
déterminer une coordonnée de position du terminal mobile (100) dans un système de coordonnées spatiales prédéfini sur la base du temps auquel le signal de positionnement est reçu par les au moins trois points d'ancrage de positionnement ;
déterminer l'action en termes de gestuelle de l'utilisateur sur la base de la coordonnée de position ; et
obtenir une instruction de jeu qui corresponde à l'action en termes de gestuelle à partir d'une bibliothèque d'instructions prédéfinie en tant qu'instruction de jeu pour faire fonctionner l'application de jeu.

8. Terminal (200) embarqué sur un véhicule, comprenant un programme informatique qui est stocké dans le terminal (200) embarqué sur un véhicule, dans lequel le programme informatique comprend des instructions qui, lorsqu'elles sont exécutées par le terminal embarqué sur un véhicule, forcent le terminal embarqué sur un véhicule à exécuter le procédé de commande de jeu sur la base d'une interaction homme-véhicule selon l'une quelconque des revendications 1 à 6.
